(19) Europäisches Patentamt / European Patent Office / Office européen des brevets

(11) **EP 4 549 390 A1**

(12) **EUROPEAN PATENT APPLICATION**
published in accordance with Art. 153(4) EPC

(43) Date of publication:
07.05.2025 Bulletin 2025/19

(21) Application number: 23831183.1

(22) Date of filing: 19.06.2023

(51) International Patent Classification (IPC):
*C01F 5/02* (2006.01)     *C01F 7/021* (2022.01)

(52) Cooperative Patent Classification (CPC):
C01F 5/02; C01F 7/021

(86) International application number:
PCT/JP2023/022604

(87) International publication number:
WO 2024/004737 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.06.2022 JP 2022103520

(71) Applicant: Denka Company Limited
Tokyo 103-8338 (JP)

(72) Inventors:
• TSUNEYOSHI, Toshihiko
Tokyo 103-8338 (JP)
• FUKAZAWA, Motoharu
Tokyo 103-8338 (JP)
• OKABE, Takuto
Tokyo 103-8338 (JP)

(74) Representative: Gulde & Partner
Patent- und Rechtsanwaltskanzlei mbB
Berliner Freiheit 2
10785 Berlin (DE)

(54) **METHOD FOR PRODUCING INORGANIC METAL OXIDE POWDER CONTAINING COATED PARTICLES**

(57)     Provided is a method for producing an inorganic metal oxide powder containing particles with coated surfaces (coated particles), wherein the amount of increase in the BET specific surface area of a finally obtained inorganic metal oxide powder with respect to the BET specific surface area of a raw material powder is small, and the flowability does not tend to decrease when filling a resin.

A production method for an inorganic metal oxide powder (I) containing coated particles (X), wherein: the production method includes spraying and tumbling fluidized-bed coating a slurry (C) containing a coating component (B) onto a raw material inorganic metal oxide powder (A), then firing the powder to obtain the inorganic metal oxide powder (I) containing the coated particles (X); and a ratio ((Si)/(Sa)) of a BET specific surface area (Si) of the inorganic metal oxide powder (I) with respect to a BET specific surface area (Sa) of the inorganic metal oxide powder (A) is 5.0 or lower.

EP 4 549 390 A1

## Description

### TECHNICAL FIELD

The present invention relates to a method for producing an inorganic metal oxide powder containing coated particles.

### BACKGROUND

In the field of semiconductor encapsulation materials, etc., inorganic metal oxide powders such as silica and alumina are used as fillers for the purpose of improving the thermal expansion coefficient, the thermal conductivity, the flame retardance, etc. Silica has a relatively low thermal conductivity, and alumina, though having a higher thermal conductivity than that of silica, also has high hardness, which tends to cause wear in used equipment. Therefore, magnesium oxide powder, which has a thermal conductivity higher than those of silica and alumina, and which further has a hardness lower than that of alumina, is being investigated as a filler that could be applied to the above-mentioned fields.

Magnesium oxide is known to have low moisture resistance and to react with water in the atmosphere to form magnesium hydroxide. Since an increase in the magnesium hydroxide content tends to lower the thermal conductivity, the surfaces of magnesium oxide particles are coated to increase the moisture resistance, etc. (e.g., Patent Documents 1, 2, etc.).

Patent Document 1: JP 2003-34523 A
Patent Document 2: JP 2008-74683 A

### SUMMARY OF INVENTION

Meanwhile, with conventional methods for producing coated inorganic metal oxide powders, the coating can sometimes cause the specific surface area of the powder to increase. This is caused by the coating changing the shape or the surface smoothness of the particles constituting the powder, etc. If the BET specific surface area largely increases compared with that before the coating, the desired physical properties can become difficult to obtain. Additionally, since inorganic metal oxide powder fillers are generally often used by filling a resin, if the specific surface area becomes too large, there are problems such as the filling properties or the dispersibility in the resin being reduced, the flowability being lost, and the powder becoming difficult to handle.

Therefore, an objective of the present invention is to provide a method for producing an inorganic metal oxide powder containing particles with coated surfaces (coated particles), wherein the amount of increase in the BET specific surface area of a finally obtained inorganic metal oxide powder with respect to the BET specific surface area of a raw material powder is small, and the flowability when filling a resin does not tend to decrease.

As a result of diligent investigation, the present inventors discovered that all of the aforementioned problems can be solved by a production method that includes coating a raw material inorganic metal oxide powder by tumbling fluidized-bed coating, thereby completing the present invention.

That is, the present invention includes the embodiments below.

[1] A production method for an inorganic metal oxide powder (I) containing coated particles (X), wherein: the production method includes spraying and tumbling fluidized-bed coating a slurry (C) containing a coating component (B) onto a raw material inorganic metal oxide powder (A), then firing the powder to obtain the inorganic metal oxide powder (I) containing the coated particles (X); and a ratio ((Si)/(Sa)) of a BET specific surface area (Si) of the inorganic metal oxide powder (I) with respect to a BET specific surface area (Sa) of the inorganic metal oxide powder (A) is 5.0 or lower.

[2] The production method according to [1], wherein a firing temperature is 500-1600°C.

[3] The production method according to [1] or [2], wherein a firing time is 0.1-12 hours.

[4] The production method according to any of [1] to [3], wherein spraying the slurry (C) onto the inorganic metal oxide powder (A) is performed within a range such that a percentage of the coating component (B) with respect to a total amount (100% by mass) of the inorganic metal oxide powder (A) and the coating component (B) becomes 1-25% by mass.

[5] The production method according to any of [1] to [4], wherein: a median diameter (Da50) of the inorganic metal oxide powder (A) is 10-150 $\mu$m; and a median diameter (Di50) of the inorganic metal oxide powder (I) is 11-300 $\mu$m.

[6] The production method according to any of [1] to [5], wherein the ratio (Si)/(Sa) is 0.5 or higher.

[7] The production method according to any of [1] to [6], wherein the coating component (B) contains an inorganic metal oxide powder (B1).

[8] The production method according to any of [1] to [7], wherein the coated particles (X) include core-shell particles.

[9] The production method according to any of [1] to [8], wherein the inorganic metal oxide powder (A) includes an inorganic metal oxide powder or a powder of an inorganic metal multiple oxide including at least one element selected from titanium, aluminum, magnesium, silicon, and calcium.

[10] The production method according to any of [1] to [9], wherein: the inorganic metal oxide powder (A) includes a magnesium oxide powder; the coating component (B) includes at least one inorganic metal oxide powder (B1) selected from an alumina powder and a silica powder; and the coated particles (X) include particles in which the surfaces of core particles containing magnesium oxide are coated with coating layers.

[11] The production method according to [10], wherein the coating layers contain at least one substance selected from $Al_2O_3$, an $MgO\text{-}Al_2O_3$ complex oxide, $SiO_2$, and an $MgO\text{-}SiO_2$ complex oxide.

According to the present invention, it is possible to provide a method for producing an inorganic metal oxide powder containing coated particles, wherein the amount of increase in the BET specific surface area of a finally obtained inorganic metal oxide powder with respect to the BET specific surface area of a raw material powder is small, and the flowability when filling a resin does not tend to decrease.

## DESCRIPTION OF EMBODIMENTS

Hereinafter, one embodiment of the present invention will be explained in detail. The present invention is not limited to the embodiment below and can be implemented by adding modifications, as appropriate, within a range not compromising the effects of the present invention. When a specific explanation regarding one embodiment also applies to another embodiment, there are cases in which that explanation will be omitted regarding the other embodiment. The expression "$\alpha$-$\beta$" indicating numerical ranges in the present specification means "$\alpha$ or more and $\beta$ or less". Additionally, in the present specification, a "powder" refers to an "assembly of particles".

[Production method of inorganic metal oxide powder (I) containing coated particles (X)] The present embodiment relates to a production method for an inorganic metal oxide powder (I) containing coated particles (X), wherein: the production method includes spraying and tumbling fluidized-bed coating a slurry (C) containing a coating component (B) onto a raw material inorganic metal oxide powder (A), then firing the powder to obtain the inorganic metal oxide powder (I) containing the coated particles (X); and the ratio ((Si)/(Sa)) of the BET specific surface area (Si) of the inorganic metal oxide powder (I) with respect to the BET specific surface area (Sa) of the inorganic metal oxide powder (A) is 5.0 or lower. According to the production method of the present embodiment, it is possible to produce an inorganic metal oxide powder (I) wherein the rate of increase in the BET specific surface area of the finally obtained inorganic metal oxide powder with respect to the BET specific surface area of the raw material powder is small, and the flowability when filling a resin does not tend to decrease.

In the inorganic metal oxide powder (I) (hereinafter sometimes referred to as "powder (I)") containing coated particles (X) obtained by the production method according to the present embodiment, the amount of increase in the BET specific surface area of the finally obtained inorganic metal oxide powder (I) with respect to the BET specific surface area of the raw material inorganic metal oxide powder (A) is small. In the present embodiment, the amount of increase in the specific surface area before and after the coating is represented by the ratio ((Si)/(Sa)) of the BET specific surface area (Si) of the inorganic metal oxide powder (I) with respect to the BET specific surface area (Sa) of the raw material inorganic metal oxide powder (A). According to the production method of the present embodiment, (Si)/(Sa) can be suppressed to 5.0 or lower. The closer (Si)/(Sa) is to 1.0, the smaller the change in the BET specific surface area between the raw material inorganic metal oxide powder (A) (hereinafter sometimes referred to as "raw material powder (A)") and the powder (I).

Increases in the BET specific surface area due to the coating are caused by changes in the shapes of the particles constituting the powder, the surface smoothness of the particles becoming lower (i.e., the surface roughness becoming higher), etc. The production method according to the present embodiment tends to suppress decreases in the surface smoothness of particles by coating and can thus hold the (Si)/(Sa) value to 5.0 or lower.

In one embodiment, the lower limit of (Si)/(Sa) may be 0.5 or higher. That is, (Si)/(Sa) may be within the range 0.5-5.0. In the case in which (Si)/(Sa) is less than 1.0, the BET specific surface area (Si) of the powder (I) is smaller than the value of the BET specific surface area (Sa) of the raw material powder (A). As a production method for a coated powder, a method of coating a raw material powder by immersing the raw material powder in an aqueous solution containing the coating component and firing the powder is known. With such a method, it is extremely difficult to suppress the amount of increase in the BET specific surface area of the coated powder so as to be small, and further, to make the specific surface area of the coated powder smaller than the specific surface area of the raw material powder. The reason is that, with the above-mentioned method, the coated powder is obtained by firing the powder after having crushed a cake layer obtained by filter-separating the raw material powder and the coating component, which are mixed together in the solution, yet it is extremely difficult to evenly and smoothly coat the coating component onto the surface of the raw material powder after crushing the cake layer. The production method according to the present embodiment, by making use of tumbling fluidized-bed coating, can evenly and finely coat each of the particles constituting the raw material powder (A), and since this obviates the need for a crushing step as in the conventional method, the specific surface area of the powder (I) can be kept from increasing. For this reason, with the production method according to the present embodiment, (Si)/(Sa) can be adjusted to be less than 1.0. In a preferable embodiment, (Si)/(Sa) may be 0.5-4.0, may be 0.5-3.0, and may be 0.5-2.0. (Sa) and (Si) can be measured under the conditions indicated below.

(BET specific surface area measurement method)

A measurement cell of a fully automated specific surface area measurement apparatus (BET-point method) (e.g., fully automated specific surface area measurement apparatus Macsorb HM model-1201 manufactured by Mountech Co., Ltd.) is filled with 5 g of the raw material powder (A) (or the powder (I)) to measure the specific surface area. The degassing conditions prior to measurement were 200°C for 10 minutes. Additionally, helium was used as the carrier gas and nitrogen (mixing concentration: 30.5%) was used as the adsorption gas.

<Raw material inorganic metal oxide powder (A)>

In the production method according to the present embodiment, the raw material powder (A) is not particularly limited as long as it is an inorganic metal oxide powder. An "inorganic metal oxide" refers to a compound in which a metal element is bonded with oxygen. Although an inorganic metal oxide powder that can be favorably used in the field of semiconductor encapsulation materials may be used as the raw material powder (A) in the present embodiment, there is no limitation thereto. As inorganic metal oxide powders that can be favorably used in the encapsulation material field, there are, for example, inorganic metal oxide powders or powders of inorganic metal multiple oxides containing at least one element selected from titanium, aluminum, magnesium, silicon, and calcium. An "inorganic metal multiple oxide" refers to a higher oxide comprising an oxide including two or more types of metal ions. The raw material powder (A) should preferably include the aforementioned inorganic metal oxide powder or inorganic metal multiple oxide powder. Of these, from the aspect of obtaining a powder (I) with good thermal conductivity, the raw material powder (A) should preferably include an inorganic metal oxide powder or an inorganic metal multiple oxide powder containing at least one element selected from aluminum and magnesium and should more preferably include a magnesium oxide powder. In one embodiment, the raw material powder (A) may be constituted by only a magnesium oxide powder.

(Magnesium oxide powder)

In the case in which the raw material powder (A) includes a magnesium oxide powder, the purity of the magnesium oxide powder is not particularly limited and should preferably be determined in accordance with the application. For example, in the case in which the powder (I) obtained by means of the production method according to the present embodiment is to be used as a filler for a semiconductor encapsulation material, a magnesium oxide powder with a purity of 90% or higher is preferably used, and a magnesium oxide powder with a purity of 95% or higher is more preferably used. Additionally, a magnesium oxide powder produced by a conventionally known method, for example, a method such as an electric melting method or a firing method, may be used.

In one embodiment, the periclase crystallite diameter of the magnesium oxide powder is preferably $50 \times 10^{-9}$ m or larger. If the magnesium oxide powder has a crystallite diameter of $50 \times 10^{-9}$ m or larger, good thermal conductivity tends to be obtained. The "crystallite diameter" refers to a value computed by the Scherrer formula using an X-ray diffraction method. In the case in which the particles are polycrystalline bodies, the crystallite diameter indicates the average value of the sizes of the single crystals in the polycrystalline bodies.

(Physical properties of raw material powder (A))

In one embodiment, the BET specific surface area (Sa) of the raw material powder (A), from the aspect of flowability, may be 0.01-20 $m^2/g$, may be 0.01-10 $m^2/g$, and may be 0.01-1 $m^2/g$.

In one embodiment, the median diameter (Da50) of the raw material powder (A), from the aspect of flowability, may be 10-150 $\mu$m, may be 20-140 $\mu$m, may be 40-130 $\mu$, and may be 45-120 $\mu$m. If the median diameter (Da50) of the raw material powder (A) is within the aforementioned range, the change in the specific surface area when coating the powder by tumbling fluidized-bed coating tends to be small. In the present specification, the "median diameter (D50)" refers to the particle diameter in which the cumulative value corresponds to 50% in a volume-based cumulative particle size distribution, measured by using a laser diffraction-type particle size distribution measurement apparatus (e.g., product name "LS 13 320" manufactured by Beckman Coulter, Inc., or product name "MT3300EXII", manufactured by MicrotracBEL Corp.). The cumulative particle size distribution is represented by a distribution curve in which the horizontal axis represents the particle diameter ($\mu$m) and the vertical axis represents the cumulative value (%).

The average roundness (ARa) of the raw material powder (A) is not particularly limited. In one embodiment, from the aspect of the filling properties with respect to resins, the average roundness (ARa) may be 0.70 or higher, may be 0.80 or higher, and may be 0.90 or higher. The average roundness can be measured by the method indicated below.

(Average roundness measurement method)

The raw material powder (A) (or the powder (I)) is immobilized with carbon tape, then osmium-coated. Thereafter, a scanning electron microscope (e.g., product name "JSM-7001F SHL", manufactured by JEOL Ltd.) is used to capture images of the particles at 200-50,000 times magnification, and an image analysis apparatus (e.g., product name "Image-Pro Premier Ver. 9.3", manufactured by Nippon Roper KK) is used to compute the projected area ($A_p$) and the projected circumference (L) of a particle, and the roundness is calculated by Formula (1) indicated below. The roundness is calculated for 200 arbitrary particles, and the average value thereof is defined as the average roundness

$$\text{Roundness} = 4\pi A_p/L^2 \qquad \dots (1)$$

Production methods that include conventional wet coating tend to be affected by the surface states of the raw material particles such that, when a raw material powder containing particles having low surface smoothness (high surface roughness) is used, the percentage of uncoated portions sometimes increases, thereby tending to increase the specific surface area of the obtained powder. According to the production method of the present embodiment, even when a powder containing particles with relatively low surface smoothness is used as the raw material powder (A), coated particles substantially lacking uncoated portions tend to be obtained as the coated particles (X). The surface smoothness (surface roughness) of the particles contained in the raw material powder (A) and the powder (I) can be evaluated by a method such as shape observation by means of a scanning electron microscope.

In one embodiment, the average particle density of the raw material powder (A), from the aspect that appropriate powder flowability tends to be obtained in the tumbling fluidized-bed coating process, may be 0.1-7.0 g/cm$^3$, and may be 0.5-5.5 g/cm$^3$. The average particle density can be measured by the method indicated below.

(Average particle density measurement method)

A measurement sample cell of a dry-type pycnometer (product name "AccuPyc II 1340", manufactured by Shimadzu Corp.) is filled with 2.0 g of the raw material powder (A) (or the powder (I)), and the average particle density is measured by a gas (helium) replacement method.

In one embodiment, a raw material powder (A) that is surface-treated with a surface treatment agent may be used. The production method according to the present embodiment is less susceptible to the influence of the surface state of the raw material powder (A) than conventional wet coating methods because the raw material powder (A) is coated by tumbling fluidized-bed coating. For this reason, a surface-treated raw material powder (A) may be used. As the surface treatment agent, there are, for example, silane coupling agents, aluminate coupling agents, etc. These may be used as a single type alone or as a combination of two or more types. Whether or not the raw material powder (A) is surface-treated can be checked by analyzing the raw material powder (A), for example, by IR, TG-DTA, or mass spectrometry.

<Slurry (C) containing coating component (B)>

The production method according to the present embodiment includes spraying and tumbling fluidized-bed coating a slurry (C) containing the coating component (B) onto the raw material inorganic metal oxide powder (A), then firing the powder. The coating component (B) contained in the slurry (C) may be either a component that can react with the raw material powder (A) to form coating layers on the surfaces of the particles (hereinafter sometimes referred to as "raw material particles (A)") constituting the raw material powder (A), or a component that can form the coating layers without reacting with the raw material particles (A). From the aspect that even and continuous coating layers tend to be formed, a component that can react with the raw material particles (A) to form coating layers on the surfaces of the raw material particles (A) is preferable.

The coating component (B) that can react with the raw material particles (A) is not particularly limited as long as the effects of the present invention are obtained. In one embodiment, an inorganic metal oxide powder (B1) is preferably included as the coating component (B). The inorganic metal oxide powder (B1) included in the coating component (B) is not particularly limited as long as it can react with the raw material particles (A), and there are, for example, inorganic metal oxide powders such as alumina, silica, and titania. These may be used as a single type alone or as a combination of two or more types.

In a preferable embodiment, when the coating component (B) includes an inorganic metal oxide powder (B1) (hereinafter sometimes referred to as the "powder (B1)"), the median diameter $(Db_150)$ of the powder (B1) is preferably 1-10,000 nm, and more preferably 10-1,000 nm. Additionally, in one embodiment, the ratio $((Db_150)/(Da50))$ of the average particle size $(Db_150)$ of the powder (B1) with respect to the median diameter $(Da50)$ of the raw material powder (A) may be $8.0 \times 10^{-6}$ to $1.0 \times 10^{-1}$ and may be $5.0 \times 10^{-5}$ to $5.0 \times 10^{-2}$. If $((Db_150)/(Da50))$ is within the aforementioned range, the coating component (B) including the powder (B1) tends to more efficiently coat the surfaces of the raw material particles (A).

In one embodiment, if the coating component (B) includes an inorganic metal oxide powder (B1) and the raw material powder (A) includes a magnesium oxide powder, the inorganic metal oxide powder (B1) preferably includes at least one inorganic metal oxide powder selected from among alumina $(Al_2O_3)$ powder and silica $(SiO_2)$ powder, and more preferably includes an alumina powder. In this case, the coated particles (X) contained in the obtained powder (I) preferably include particles in which the surfaces of core particles containing magnesium oxide are coated with coating layers. Additionally, the coating layers preferably include at least one substance selected from $Al_2O_3$, an $MgO-Al_2O_3$ complex oxide, $SiO_2$, and an $MgO-SiO_2$ complex oxide.

When using a magnesium oxide powder as the raw material powder (A) and coating the powder with an inorganic metal oxide powder (B1) such as alumina, from the aspect that the moisture resistance of the obtained powder (I) tends to further improve, the coated particles (X) preferably include core-shell particles. In this case, the coated particles (X) more preferably include coated particles (X) including core-shell particles in which the surfaces of core particles containing magnesium oxide are coated with coating layers containing at least one substance selected from the above-mentioned $Al_2O_3$, $MgO-Al_2O_3$ complex oxide, $SiO_2$, and $MgO-SiO_2$ complex oxide. Additionally, the coating layers of the core-shell particles preferably contain an $MgO-Al_2O_3$ complex oxide, and more preferably contain $MgAl_2O_4$.

In one embodiment, the content of the coating component (B) in the slurry (C) with respect to the overall mass of the slurry (C) may be 0.1-80% by mass and may be 1-50% by mass. If the content of the coating component (B) is within the aforementioned ranges, the amount of the coating component (B) sprayed onto the raw material powder (A) can be easily adjusted to be within the preferable range indicated below.

The dispersion medium in the slurry (C) preferably contains water or ethanol, and more preferably contains water. The slurry (C) may contain components other than the coating component (B) and the dispersion medium. As the other components, there are, for example, dispersants, binders, etc.

In one embodiment, the amount of the coating component (B) sprayed onto the raw material powder (A), from the aspect that the (Si)/(Sa) value can be easily controlled to be lower, is preferably 1-25% by mass with respect to the total amount (100% by mass) of the raw material powder (A) and the coating component (B). That is, the slurry (C) can be sprayed onto the raw material powder (A) so that the percentage of the coating component (B) with respect to the total amount (100% by mass) of the raw material powder (A) and the coating component (B) is within the range 1-25% by mass. In another embodiment, the amount of the coating component (B) that is sprayed, from the aspect that core-shell particles can be more easily obtained, may be 1% by mass or more and less than 25% by mass, may be 1-20% by mass, may be 1% by mass or more and less than 20% by mass, may be 1-18% by mass, and may be 5-20% by mass with respect to the total amount (100% by mass) of the raw material powder (A) and the coating component (B).

<Tumbling fluidized-bed coating>

The production method according to the present embodiment includes spraying and tumbling fluidized-bed coating the aforementioned slurry (C) onto the raw material powder (A). Tumbling fluidized-bed coating is also known as tumbling fluidized coating, tumbling fluidized granulation coating, etc., and is a coating method using a coating apparatus on which blade rotors are installed on the lower portion of a common fluidized-bed apparatus. The present inventors discovered that, by producing the powder (I) including the coated particles (X) by spraying the slurry (C) containing the coating component (B) onto the raw material powder (A) during tumbling fluidized-bed coating, increases in the BET specific surface area due to the coating can be suppressed, thereby controlling the (Si)/(Sa) value to be 5.0 or lower. Furthermore, they also discovered that the surfaces of the raw material powder (A) can be efficiently coated by tumbling fluidized-bed coating.

In one embodiment, the tumbling fluidized-bed coating may be performed under conditions of 20-150°C, may be performed under conditions of 30-100°C, and may be performed under conditions of 50-90°C. Additionally, the coating time is not particularly limited as long as the surfaces of the raw material particles (A) can be sufficiently coated. From the aspect of forming even coating layers, the coating time may be 0.01-24 hours, may be 0.05-24 hours, and may be 0.1-12 hours.

The tumbling fluidized-bed coating may be performed by using a conventionally known tumbling fluidized-bed apparatus. For example, equipment such as that with the product name "Tumbling fluidized bed granulating-coating machine MP (Multiplex)", manufactured by Powrex Corp., may be used.

<Firing>

The production method according to the present embodiment includes firing the raw material powder (A) after the tumbling fluidized-bed coating. The firing temperature, from the aspect of forming even coating layers, is preferably 500-1600°C, more preferably 700-1600°C, even more preferably 1000-1600°C, and particularly preferably 1000-1400°C. In one embodiment, the firing temperature may be higher than 1000°C and 1600°C or lower, and may be 1100-1500°C. Additionally, the firing time, from the aspect of forming even coating layers, is preferably 0.1-12 hours, more preferably 0.5-10 hours, even more preferably 1-10 hours, and particularly preferably 1-8 hours.

<Other steps>

After the firing step, the coated powder (A) that is obtained may be an aggregate. Thus, a crushing process may be performed as needed. The crushing method is preferably performed under conditions in which the BET specific surface area (Si) of the powder (I) does not tend to change. For example, a mortar, a bead mill, a ball mill, etc. may be employed.

In one embodiment, after the raw material powder (A) has been fired, the obtained powder (I) may be classified by sifting, by airflow classification, etc. By classifying the powder (I), (Si)/(Sa) can be easily controlled to be 5.0 or lower.

[Inorganic metal oxide powder (I)] The inorganic metal oxide powder (I) including the coated particles (X) can be prepared by the production method according to the present embodiment.

<Coated particles (X)>

The coated particles (X) obtained by the production method of the present embodiment refer to particles in which the surfaces thereof are at least partially coated with the coating component (B). In a preferable embodiment, the coated particles (X) preferably include core-shell particles substantially lacking uncoated portions on the surfaces thereof. In one embodiment, the coated particles (X) are preferably core-shell particles. The "core-shell particles" refer to coated particles in which the particle surfaces are mostly coated. Regarding whether the coated particles (X) are core-shell particles, for example, in a cross-sectional image of a coated particle (X) obtained by a field emission scanning electron microscope (e.g., product name "MERLIN, FE-SEM" manufactured by Carl Zeiss Co., Ltd.) and by energy-dispersive X-ray spectroscopy (e.g., product name "QUANTAX System XFlash 6/60 SDD, EDS" manufactured by Bruker Corp.), if the ratio (rc/ra) between the cross-sectional circumference ra of an inorganic metal oxide particle (A) (raw material particle (A)) serving as the core portion and the circumference rc of a portion coated by the coating component (B) in the cross-section of the raw material particle (A) is 0.6 or higher, the core particle can be determined to be mostly coated by the coating layer (i.e., the particle can be considered to be a core-shell particle).

By coating the raw material powder (A) with the coating component (B) by means of the aforementioned method including tumbling fluidized-bed coating, coated particles (X) in which the surfaces of the particles (raw material particles (A)) constituting the raw material powder (A) are at least partially coated with the coating component (B) are obtained. Coated particles (X) including core-shell particles can be more easily obtained by adjusting the sprayed amount of the aforementioned coating component (B), by adjusting the firing temperature and the firing time, etc. For example, in the case in which a magnesium oxide powder is employed as the raw material powder (A) and the magnesium oxide powder (A) is to be coated with a coating component (B) including an alumina powder, core-shell particles tend to be formed by setting the sprayed amount of the coating component (B) to be 1-20% by mass, converted for alumina powder, with respect to the total amount (100% by mass) of the magnesium oxide powder (A) and the coating component (B), by setting the firing temperature to be higher than 1000°C and 1600°C or lower, etc. A magnesium oxide powder (I) including such core-shell particles also tends to have good moisture resistance.

In one embodiment, the percentage of the coated particles (X) in the powder (I), from the aspect that (Si)/(Sa) can be easily controlled to be 5.0 or lower, is preferably 80% or higher, and is more preferably 90% or higher.

In one embodiment, particles other than the coated particles (X) may be included in the powder (I). As other particles, there are, for example, particles of inorganic metal oxides or inorganic metal multiple oxides derived from the uncoated inorganic metal oxide powder (A) or from the coating component (B), etc. These may be included as a single type alone or as two or more types.

In one embodiment, when an inorganic metal oxide powder having a BET specific surface area (Sa) of 0.01-10 $m^2/g$ is used as the raw material powder (A), the BET specific surface area (Si) of the powder (I) is set so that (Si)/(Sa) is within the range of 5.0 or lower, preferably 0.015-25 $m^2/g$, and more preferably 0.02-20 $m^2/g$.

In one embodiment, when an inorganic metal oxide powder having a median diameter (Da50) of 10-150 $\mu$m is used as the raw material powder (A), the median diameter (Di50) of the powder (I) is preferably 11-300 $\mu$m, more preferably 11-200 $\mu$m, and even more preferably 11-180 $\mu$m.

In one embodiment, when a raw material powder (A) having an average roundness (ARa) of 0.75 or higher is used, the average roundness (ARi) of the powder (I) is preferably 0.75 or higher, and more preferably 0.80 or higher.

In one embodiment, from the aspect of retaining high thermal conductivity, the thickness of the coating layer, which is computed as the difference ((Di50) - (Da50)) between the median diameter (Di50) of the powder (I) including the coated particles (X) and the median diameter (Da50) of the raw material powder (A), may be 40 μm or less, and may be 35 μm or less. From the aspect that a resin composition with lower viscosity tends to be obtained and the flowability tends to be good when filling a resin, the thickness of the coating layer may be 30 μm or less and may be 26 μm or less.

In a powder obtained by coating raw material particles by a conventional coating method such as wet coating, if a raw material powder with low average roundness is used, the average roundness of the obtained powder also tends to be low. Additionally, if a raw material powder with low average roundness is coated, there tends to be a lot of uncoated portions. If the coated amount is increased from the aspect of reducing uncoated portions or of making the average roundness of the coated powder higher, there are problems in that the desired median diameter (D50) is difficult to obtain or in that the thermal conductivity tends to be lower when used as a filler. In the powder (I) obtained by the production method according to the present embodiment, a powder (I) with a high average roundness (ARi) tends to be obtained, even when a raw material powder (A) with low average roundness (ARa) is used. Additionally, since the particles can be entirely coated with a relatively small coating amount, the thermal conductivity also does not tend to become lower.

<Magnesium oxide powder>

If the powder (I) obtained by the production method according to the present embodiment is one in which the surfaces of a raw material powder (A) including a magnesium oxide powder are coated with alumina, silica, etc., the obtained magnesium oxide powder has high thermal conductivity and also has excellent moisture resistance. In one embodiment, the thermal conductivity of the magnesium oxide powder (I) obtained by the production method according to the present embodiment, measured under the conditions indicated below, may be 4.0-8.0 W/mK, and may be 5.0-7.0 W/mK.

(Measurement conditions)

A mixed powder is prepared by mixing a magnesium oxide powder with a spherical alumina powder (e.g., product name "DAW-07" or product name "ASFP-40", etc., manufactured by Denka Company Limited) at a volume ratio of 51:49. An evaluation sheet is prepared by filling a silicone resin (e.g., product name "SE1885:A" or product name "SE1885:B", etc., manufactured by Shin-Etsu Chemical Co., Ltd.) with the mixed powder such that the percentage of the mixed powder becomes 77.5% by volume. The evaluation sheet is measured with a thermal resistance measuring machine (e.g., product name "TRM-046 RHHT" manufactured by Hitachi Technology and Services, Ltd.) to determine the thermal conductivity.

Additionally, the magnesium hydroxide content in the magnesium oxide powder (I), after having performed a test under the conditions indicated below, is preferably lower than 50% by mass, more preferably 30% by mass or lower, and even more preferably 10% by mass or lower. The magnesium oxide powder (I) obtained by the production method according to the present embodiment has excellent moisture resistance and does not tend to generate magnesium hydroxide.

(Post-testing magnesium hydroxide content measurement conditions)

10 g (M1) of the inorganic metal oxide powder (I) were placed at rest for 168 hours inside a highly accelerated stress test apparatus (e.g., product name "Highly Accelerated Stress Test System EHS-212M", manufactured by Espec Corp.; conditions: unsaturated mode) at a temperature of 135°C and a humidity of 85% RH. The mass (M2) of the inorganic metal oxide powder (I) after being placed at rest was measured, and the change in mass before and after being placed at rest was substituted into Formula (2) below to calculate the magnesium hydroxide content.

$$\{(M2 - M2)/18.0\} \times (40.3/M1) \times 100 \qquad \dots (2)$$

(In Formula (2), M1 denotes the mass (g) of the inorganic metal oxide powder (I) before being placed at rest, M2 denotes the mass (g) of the inorganic metal oxide powder (I) after being placed at rest, and 18.0 and 40.3 are respectively the molecular weights of $H_2O$ and MgO).

[Use]

In the powder (I) obtained by the production method according to the present embodiment, the amount of increase in the BET specific surface area of the finally obtained inorganic metal oxide powder with respect to the BET specific surface area of the raw material powder is small, and therefore, the flowability does not tend to decrease when filling a resin. Additionally, if the powder (I) is a magnesium oxide powder, the moisture resistance is excellent and the thermal conductivity is also good. Such a powder (I) can be favorably utilized as a filling material for resins.

[Resin composition]

The resin composition according to the present embodiment includes the powder (I) prepared by the aforementioned production method and at least one resin selected from thermoplastic resins and thermosetting resins.

The content of the powder (I) in the resin composition is not particularly limited, and can be adjusted, as appropriate, in accordance with the purpose. For example, in the case of use as an encapsulation material, the powder (I) may be blended within the range 1-99% by mass, and more preferably within the range 10-90% by mass with respect to the overall mass of the resin composition.

<Resin>

The resin composition according to the present embodiment includes at least one resin selected from among thermoplastic resins and thermosetting resins. More specifically, there are, for example, polyethylene resins; polypropylene resins; epoxy resins; silicone resins; phenol resins; melamine resins; urea resins; unsaturated polyester resins; fluororesins; polyamide-based resins such as polyimide resins, polyamideimide resins, and polyetherimide resins; polyester-based resins such as polybutylene terephthalate resins and polyethylene terephthalate resins; polyphenylene sulfide resins; fully aromatic polyester resins; polysulfone resins; liquid-crystal polymer resins; polyethersulfone resins; polycarbonate resins; maleimide-modified resins; ABS resins; AAS (acrylonitrile-acrylic rubber-styrene) resins; AES (acrylonitrile-ethylene-propylene-diene rubber-styrene) resins; hydrocarbon-based elastomer resins; polyphenylene ether resins; aromatic polyene-based resins; etc. These may be used as a single type alone or as a combination of two or more types.

A curing agent, a curing accelerator, a mold release agent, a coupling agent, a coloring agent, a flame retardant, an ion scavenger, etc. may be blended into the resin composition according to the present embodiment within a range not compromising the effects of the present invention.

<Resin composition production method>

The production method for the resin composition is not particularly limited, and the resin composition may be produced by stirring, dissolving, mixing, and dispersing prescribed amounts of the respective materials. Although the apparatus for mixing, stirring, dispersing, etc. the mixture thereof is not particularly limited, a mortar, a three-roll mill, a ball mill, a planetary mixer, etc. equipped with a stirrer and a heating apparatus may be used. Additionally, these apparatuses may be used by being combined as appropriate.

As mentioned above, the resin composition containing the coated powder (A) has excellent flowability and therefore has good handling properties.

More preferable modes of the present embodiment are as indicated below.

<1> A production method for a magnesium oxide powder (I) containing coated particles (X), wherein:

the production method includes spraying and tumbling fluidized-bed coating a slurry containing at least one coating component (B) selected from alumina powders and silica powders onto a raw material magnesium oxide powder (A), then firing the powder to obtain a magnesium oxide powder containing the coated particles (X); a percentage of the coating component (B) sprayed onto the magnesium oxide powder (A) with respect to a total amount (100% by mass) of the magnesium oxide powder (A) and the coating component (B) is 1% by mass or more and less than 25% by mass; and a ratio ((Si)/(Sa)) of a BET specific surface area (Si) of the magnesium oxide powder (I) with respect to a BET specific surface area (Sa) of the magnesium oxide powder (A) is 5.0 or lower.

<2> The production method according to <1>, wherein the coating component (B) includes an alumina powder, and a percentage of the alumina powder sprayed onto the magnesium oxide powder (A) with respect to a total amount (100% by mass) of the magnesium oxide powder (A) and the coating component (B) is 1-20% by mass.

<3> The production method according to <1> or <2>, wherein a firing temperature is higher than 1000°C and 1600°C or lower.

<4> The production method according to any of <1> to <3>, wherein the coated particles (X) include core-shell particles in which the surfaces of core particles containing magnesium oxide are coated with coating layers containing at least one substance selected from $Al_2O_3$, an $MgO\text{-}Al_2O_3$ complex oxide, $SiO_2$, and an $MgO\text{-}SiO_2$ complex oxide.

<5> The production method according to any one of <1> to <4>, wherein the slurry is sprayed onto the magnesium oxide powder (A) so that the thickness of the coating layers on the coated particles (X) becomes 30 $\mu$m or less.

**EXAMPLES**

Hereinafter, the present invention will be explained in detail by indicating examples. However, the present invention is not limited by the descriptions below.

[Example 1]

A magnesium oxide powder (product name "DMG-50" manufactured by Denka Company Limited.; median diameter (Da50): 50 $\mu$m; BET specific surface area (Sa): 0.2 m$^2$/g; average roundness (ARa): 0.93) was used as the raw material powder (A), and a slurry (C) containing an alumina powder (coating component (B), product name "CAB-O-SPERSE PG008" manufactured by Cabot Specialty Chemicals, Inc.; median diameter (Db$_1$50): 100 nm) was sprayed and tumbling fluidized-bed coated onto the magnesium oxide powder (A). The slurry (C) was sprayed onto the magnesium oxide powder (A) in an amount such that the percentage of the coating component (B) with respect to the total amount (100% by mass) of the magnesium oxide powder (A) and the coating component (B) became 7% by mass (93% by mass magnesium oxide powder (A) and 7% by mass (converted for alumina powder) coating component (B)). Thereafter, the powder was fired for 1 hour at 1300°C to obtain a magnesium oxide powder (I) (powder (I)). The (Si), the median diameter (Di50), the average roundness, and the presence or absence of the coated particles (X) in the obtained powder (I) are values measured under the conditions indicated below. The physical properties of the raw material powder (A) are also values measured under the same conditions as those for the powder (I). Additionally, the thickness of the coating layer was computed from the difference between the median diameter (Da50) of the raw material powder (A) and the median diameter (Di50) of the powder (I). As a result of these measurements, the powder (I) in Example 1 included the coated particles (X), and furthermore, (Si)/(Sa) was 0.70.

(Measurement method of BET specific surface areas (Sa) and (Si))

A measurement cell of a fully automated specific surface area measurement apparatus (BET-point method) (fully automated specific surface area measurement apparatus Macsorb HM model-1201, manufactured by Mountech Co., Ltd.) was filled with 5 g of the raw material powder (A) (or the powder (I)) to measure the specific surface area. The degassing conditions prior to measurement were 200°C for 10 minutes. Additionally, helium was used as the carrier gas and nitrogen (mixture concentration: 30.5%) was used as the adsorption gas.

(Measurement method of median diameter (D50))

The median diameter (D50) of the powder was determined by volume-based particle size distribution measurement by means of a laser diffraction-type particle size distribution measurement apparatus (product name "LS 13 320" manufactured by Beckman Coulter, Inc.). Specifically, a glass beaker was filled with 50 cm$^3$ of purified water and 0.1 g of the raw material powder (A) (or the powder (I)), then dispersed for 60 seconds at an output power of 25 W using an ultrasonic homogenizer (product name "Smurt NR-50M (titanium alloy tip $\phi$3 (NS-50M-MT3)" manufactured by Microtec Co., Ltd.). The dispersion of the raw material powder (A) (or the powder (I)) on which the dispersion process was performed was added with a dropper, one drop at a time, to the laser diffraction-type particle size distribution measurement apparatus, and measurements were made 30 seconds after a prescribed amount was added. The refractive index of water was defined to be 1.33 and the refractive index of the MgO powder was defined to be 1.74. The median diameter (D50) was computed from the particle diameter in which the cumulative value corresponds to 50% in a volume-based cumulative particle size distribution of the measured particle diameters.

(Average roundness)

The raw material powder (A) (or the powder (I)) is immobilized with carbon tape, then osmium-coated. Thereafter, a scanning electron microscope (product name "JSM-7001F SHL" manufactured by JEOL Ltd.) was used to capture images of the particles at 200-50,000 times magnification, and an image analysis apparatus (e.g., product name "Image-Pro Premier Ver. 9.3" manufactured by Nippon Roper KK) was used to compute the projected area (A$_p$) and the projected circumference (L) of a particle, and the roundness was calculated by Formula (1) indicated below. The roundness was calculated for 200 arbitrary particles, and the average value thereof was defined as the average roundness

$$\text{Roundness} = 4\pi A_p/L^2 \qquad \dots (1)$$

<Presence/absence of coated particles (X) and core-shell particles>

The powder (I) obtained in Example 1 was observed with a scanning electron microscope (product name "JSM-7001F" manufactured by JEOL Ltd.) to check for the presence or absence of coated particles (X). Additionally, regarding the powder (I), in cross-sectional images obtained by a field emission scanning electronic microscope (product name "MERLIN, FE-SEM" manufactured by Carl Zeiss Co., Ltd.) and by energy-dispersive X-ray spectroscopy (product name "QUANTAX System XFlash 6/60 SDD, EDS" manufactured by Bruker Corp.), the values of ratios (rc/ra) between the cross-sectional circumferences ra of the coated particles and the circumferences rc of portions coated by the coating component (B) in the cross-sections of the coated particles were computed to check for the presence or absence of core-shell particles. At this time, the measurements were made with an image acquisition magnification of 1000 times, an applied voltage of 10 kV, an electric current of 500 nA, and a measurement time of 30 seconds, and element mapping was performed for aluminum and magnesium. Additionally, image analysis was performed by using ImageJ to compute rc/ra, where ra was the circumference of a magnesium component-mapped portion forming a core portion in a single particle image, and rc was the circumference of a portion, on the circumferential portion of the magnesium component, contacting an aluminum component forming a shell portion (a portion was considered to be "contacting" if there was an aluminum component-mapped portion lying to the outside, by just a single pixel, of the circumferential portion of the magnesium). Particles in which rc/ra was 0.6 or higher were determined to be core-shell particles. The results are indicated in Table 1.

<Flowability evaluation>

Regarding the powder (I) obtained in Example 1, a resin composition was prepared under the conditions indicated below.
60% by volume of a bisphenol A-type liquid epoxy resin (product name "JER 828", manufactured by Mitsubishi Chemical Corporation, epoxy equivalent: 184-194) was mixed with 40% by volume of the powder (I), and the mixture was kneaded in a planetary mixer (product name "Awatori Rentaro® AR-250" manufactured by THINKY CORPORATION, rotation speed: 2000 rpm) to prepare a resin composition.

Next, the viscosity at 25°C of the obtained resin composition was measured under the conditions indicated below. Additionally, evaluations were made in accordance with the evaluation criteria below, and an evaluation of "pass" or higher was considered to be successful (having good flowability). The results are indicated in Table 1.
The viscosity at 25°C of the obtained resin composition was measured under the conditions indicated below using a rotary rheometer (product name "MCR-302", manufactured by Anton Paar GmbH).

| | |
|---|---|
| Plate shape: | Circular plate, 10 mm$\phi$ |
| Sample thickness: | 1 mm |
| Temperature: | 25 $\pm$ 1°C |
| Shear rate: | 1.0/s |

(Evaluation criteria)

| | |
|---|---|
| Excellent: | Viscosity of resin composition is 500 Pa·s/25°C or lower |
| Good: | Viscosity of resin composition is higher than 500 Pa·s/25°C and 1,000 Pa·s/25°C or lower |
| Pass: | Viscosity of resin composition is higher than 1,000 Pa·s/25°C and 2,000 Pa·s/25°C or lower |
| Fail: | Viscosity of resin composition is higher than 2,000 Pa·s/25°C |

<Thermal conductivity evaluation>

The powder (I) of Example 1 was evaluated for thermal conductivity in the case of use as a filler. First, a mixed powder was prepared by mixing the powder (I) with a spherical alumina powder (mixture of product name "DAW-07" and product name "ASFP-40" manufactured by Denka Company Limited; (DAW-07)/(ASFP-40) = 70/30 (volume ratio)) at a volume ratio of 51:49. A silicone resin (mixture of product name "SE1885:A" and product name "SE1885:B" manufactured by Shin-Etsu Chemical Co., Ltd.; (SE1885:A)/(SE1885:B) = 50/50 (volume ratio)) was filled with the mixed powder such that the percentage of the mixed powder became 77.5% by volume, and was mixed in a mixer equipped with stirring blades to obtain a resin composition. The resin composition was molded by using a sheet coater to obtain an evaluation sheet with a thickness of 3 mm. The evaluation sheet was measured with a thermal resistance measuring machine (product name "TRM-046 RHHT" manufactured by Hitachi Technology and Services, Ltd.) to determine the thermal conductivity. The results are indicated in Table 1.

[Examples 2-9]

Powders (I) were prepared in the same manner as Example 1 aside from using the raw material powders (A) and the coating conditions indicated in Table 1. Regarding the powders (I) and the raw material powders (A) of the respective examples, the (Sa), the (Si), the median diameter (D50), the average roundness, the presence or absence of coated particles (X), and the thickness of the coating layer were measured, and flowability evaluations and thermal conductivity evaluations were performed under the same conditions as those in Example 1. The results are indicated in Table 1. As the silica powder in Examples 8 and 9, product name "CAB-O-SPERSE 2017A" manufactured by Cabot Specialty Chemicals, Inc. (median diameter ($Db_1$): 100 nm) was used.

[Comparative Example 1]

A magnesium oxide powder (product name "DMG-50" manufactured by Denka Company Limited; median diameter (Da50): 50 $\mu$m; BET specific surface area (Si): 0.2 m$^2$/g; average roundness (ARa): 0.93) was used as the raw material powder (A), and the magnesium oxide powder (A) was immersed for 1 hour in an alumina slurry (coating component (B), product name "PG008" manufactured by Cabot Specialty Chemicals, Inc.; median diameter ($Db_1$50): 100 nm) and wet coated. Thereafter, the powder was fired for 2 hours at 1300°C. The obtained powder was evaluated for various physical properties by the same methods as those in Example 1. The results are indicated in Table 1.

[Table 1]

| | | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | COMPARATIVE EXAMPLE 1 |
|---|---|---|---|---|---|---|---|---|---|---|---|---|
| PRODUCTION CONDITIONS | COATING METHOD | (-) | TUMBLING FLUIDIZED-BED COATING | | | | | | | | | WET COATING |
| | COATING COMPONENT (B) | (-) | ALUMINA POWDER | | | | | | | SILICA POWDER | | ALUMINA POWDER |
| | SPRAYED AMOUNT OF SLURRY (C) (CONVERTED FOR COATING COMPONENT (B)) | (MASS%) | 7 | 7 | 1 | 7 | 7 | 20 | 20 | 20 | 1 | 7 |
| | MEDIAN DIAMETER (Db$_1$50) OF COATING COMPONENT (B) | (nm) | 100 | 100 | 100 | 100 | 100 | 100 | 100 | 100 | 100 | 100 |
| | FIRING TEMPERATURE | (°C) | 1300 | 1500 | 1300 | 1300 | 1500 | 1500 | 1500 | 1100 | 700 | 1300 |
| | FIRING TIME | (hr) | 1 | 1 | 2 | 2 | 4 | 4 | 10 | 1 | 2 | 2 |
| RAW MATERIAL POWDER (A) | MATERIAL | (-) | MAGNESIUM OXIDE POWDER | | | | | | | MAGNESIUM OXIDE POWDER | ALUMINA POWDER | MAGNESIUM OXIDE POWDER |
| | MEDIAN DIAMETER (Da50) | (µm) | 50 | 50 | 120 | 120 | 120 | 120 | 120 | 50 | 45 | 50 |
| | BET SPECIFIC SURFACE AREA (Sa) | (m$^2$/g) | 0.20 | 0.20 | 0.10 | 0.10 | 0 10 | 0.10 | 0.10 | 0.20 | 0.10 | 0.20 |
| | AVERAGE ROUNDNESS (ARa) | (-) | 0.93 | 0.93 | 0.94 | 0.94 | 0.94 | 0.94 | 0.94 | 0.93 | 0.96 | 0.93 |

(continued)

| POWDER (I) | | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | COMPARATIVE EXAMPLE 1 |
|---|---|---|---|---|---|---|---|---|---|---|---|---|
| POWDER (I) | MEDIAN DIAMETER (Di50) | ($\mu$m) | 54.1 | 54.8 | 124.5 | 132.1 | 146.1 | 140.1 | 162.1 | 72.3 | 46.0 | 63.4 |
| | BET SPECIFIC SURFACE AREA (Si) | ($m^2$/g) | 0.14 | 0.13 | 0.07 | 0.08 | 0.08 | 0.15 | 0.11 | 0.91 | 0.45 | 1.24 |
| | AVERAGE ROUNDNESS (ARi) | (-) | 092 | 0.94 | 0.93 | 092 | 0.93 | 0.89 | 0.87 | 0.88 | 0.95 | 0.85 |
| | PRESENCE/ABSENCE OF COATED PARTICLES (X) | (-) | PRESENT CORE-SHELL | PRESENT CORE-SHELL | PRESENT | PRESENT CORE-SHELI | PRESENT | PRESENT CORE-SHELL | PRESENT CORE-SHELL | PRESENT CORE-SHELL | PRESENT | PRESENT |
| | THICKNESS OF COATING LAYER | ($\mu$m) | 4.1 | 4.8 | 4.5 | 12.1 | 26.1 | 20.1 | 42.1 | 22.3 | 1.0 | 13.4 |
| | (Si)/(Sa) | (-) | 0.70 | 0.65 | 0.70 | 0.80 | 0.80 | 1.5 | 1.1 | 4.6 | 4.5 | 6.2 |
| EVALUATION RESULTS | VISCOSITY OF RESIN COMPOSITION | (Pa·s/25°C) | 626 | 578 | 620 | 425 | 442 | 1530 | 1240 | 1920 | 1320 | 2350 |
| | FLOWABILITY EVALUATION | (-) | GOOD | GOOD | GOOD | EXCELLENT | EXCELLENT | PASS | PASS | PASS | PASS | FAIL |
| | THERMAL CONDUCTIVITY | (W/mK) | 6.2 | 6.4 | 6.5 | 6.6 | 6.6 | 5.2 | 53 | 5.0 | 2.7 | 6.1 |

As indicated in Table 1, in the powders (I) of Examples 1-9 obtained by the production method according to the present embodiment, (Si)/(Sa) was 5.0 or lower. The resin compositions filled with the powders (I) of these examples had viscosities at 25°C of 2,000 Pa·s or lower and had good flowability. Meanwhile, the resin composition filled with the powder of Comparative Example 1 coated by wet coating had a viscosity at 25°C of higher than 2,000 Pa·s and had poor flowability. From the above results, it was confirmed that the inorganic metal oxide powders (I) obtained by the production method according to the present embodiment have a smaller amount of increase of the BET specific surface area of the finally obtained inorganic metal oxide powder with respect to the BET specific surface area of the raw material powder, and the flowability when filling a resin does not tend to decrease.

## INDUSTRIAL APPLICABILITY

The production method according to the present embodiment can provide an inorganic metal oxide powder containing coated particles in which the flowability does not tend to decrease when filling a resin. A resin composition containing such a powder is applicable as a ceramic filler such as a semiconductor encapsulation material.

## Claims

1.   A production method of an inorganic metal oxide powder (I) containing a coated particle (X), comprising:

   the production method includes spraying and tumbling fluidized-bed coating a slurry (C) comprising a coating component (B) onto a raw material inorganic metal oxide powder (A), then firing the powder to obtain the inorganic metal oxide powder (I) comprising the coated particle (X); and
   a ratio ((Si)/(Sa)) of a BET specific surface area (Si) of the inorganic metal oxide powder (I) with respect to a BET specific surface area (Sa) of the inorganic metal oxide powder (A) is 5.0 or lower.

2.   The production method according to claim 1, wherein a firing temperature is 500-1600°C.

3.   The production method according to claim 1 or 2, wherein a firing time is 0.1-12 hours.

4.   The production method according to claim 1 or 2, wherein spraying the slurry (C) onto the inorganic metal oxide powder (A) is performed within a range such that a percentage of the coating component (B) with respect to a total amount (100% by mass) of the inorganic metal oxide powder (A) and the coating component (B) becomes 1-25% by mass.

5.   The production method according to claim 1 or 2, wherein:

   a median diameter (Da50) of the inorganic metal oxide powder (A) is 10-150 $\mu$m; and
   a median diameter (Di50) of the inorganic metal oxide powder (I) is 11-300 $\mu$m.

6.   The production method according to claim 1 or 2, wherein the ratio (Si)/(Sa) is 0.5 or higher.

7.   The production method according to claim 1 or 2, wherein the coating component (B) comprises an inorganic metal oxide powder (B1).

8.   The production method according to claim 1 or 2, wherein the coated particle (X) comprises a core-shell particle.

9.   The production method according to claim 1 or 2, wherein the inorganic metal oxide powder (A) comprises an inorganic metal oxide powder or a powder of an inorganic metal multiple oxide comprising at least one element selected from titanium, aluminum, magnesium, silicon, and calcium.

10.   The production method according to claim 1 or 2, wherein:

   the inorganic metal oxide powder (A) comprises a magnesium oxide powder; the coating component (B) comprises at least one inorganic metal oxide powder (B1) selected from an alumina powder and a silica powder; and
   the coated particle (X) comprises a particle in which the surface of a core particle comprising magnesium oxide is coated with a coating layer.

11. The production method according to claim 10, wherein the coating layer comprises at least one substance selected from $Al_2O_3$, an $MgO$-$Al_2O_3$ complex oxide, $SiO_2$, and an $MgO$-$SiO_2$ complex oxide.

| INTERNATIONAL SEARCH REPORT | International application No. |
|---|---|
| | **PCT/JP2023/022604** |

**A. CLASSIFICATION OF SUBJECT MATTER**

***C01F 5/02***(2006.01)i; ***C01F 7/021***(2022.01)i
FI: C01F5/02; C01F7/021

According to International Patent Classification (IPC) or to both national classification and IPC

**B. FIELDS SEARCHED**

Minimum documentation searched (classification system followed by classification symbols)

C01F5/02; C01F7/021

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-27177 A (TATEHO CHEM IND CO LTD) 29 January 2004 (2004-01-29) entire text | 1-11 |
| A | JP 2021-100906 A (SHOWA DENKO KK) 08 July 2021 (2021-07-08) claims 1-23, paragraphs [0106]-[0109], [0148]-[0152] | 1-11 |
| A | JP 2013-177564 A (NITTO DENKO CORP) 09 September 2013 (2013-09-09) entire text, all drawings | 1-11 |
| A | JP 2021-172544 A (SHOWA DENKO KK) 01 November 2021 (2021-11-01) entire text | 1-11 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 August 2023** | **22 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

International application No.

**PCT/JP2023/022604**

| Patent document cited in search report | | | Publication date (day/month/year) | Patent family member(s) | Publication date (day/month/year) |
|---|---|---|---|---|---|
| JP | 2004-27177 | A | 29 January 2004 | (Family: none) | |
| JP | 2021-100906 | A | 08 July 2021 | US 2022/0399538 A1 claims 1-31, paragraphs [0114]-[0116], [0625]-[0627] WO 2021/095719 A1 EP 4060763 A1 CN 114728797 A KR 10-2022-0101132 A | |
| JP | 2013-177564 | A | 09 September 2013 | US 2015/0090922 A1 entire text, all drawings WO 2013/118848 A1 CN 104114620 A KR 10-2014-0127810 A | |
| JP | 2021-172544 | A | 01 November 2021 | (Family: none) | |

Form PCT/ISA/210 (patent family annex) (January 2015)

**EP 4 549 390 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003034523 A

- JP 2008074683 A